# EUROPEAN PATENT SPECIFICATION

(11) **EP 1 830 639 B1**
(45) Date of publication and mention of the grant of the patent: **21.11.2018**
(21) Application number: 05804969.3
(22) Date of filing: 29.12.2005
(51) Int. Cl.: A01N 33/12, C08F 8/44, D06M 15/61, A01N 43/40

(54) **ANTIMICROBIAL AND ANTIVIRAL PRODUCT**
ANTIMIKROBIELLES UND ANTIVIRALES PRODUKT
PRODUIT ANTIMICROBIEN ET ANTIVIRAL

(30) Priority: 30.12.2004 SE 0403216
(43) Date of publication of application: 12.09.2007
(73) Proprietor: Appeartex AB, 412 51 Göteborg (SE)
(72) Inventor: SCHÖNEMYR, Lars, S-412 73 Göteborg (SE); HOLMBERG, Krister, S-413 10 Göteborg (SE); PERSSON, Daniel, SE-415 07 Göteborg (SE)
(74) Representative: AWA Sweden AB
(86) International application number: PCT/SE2005/002054
(87) International publication number: WO 2006/071191

(56) References cited:
- EP-A1- 0 602 254
- EP-A1- 1 269 848
- EP-A2- 0 596 631
- WO-A1-02/085542
- WO-A1-2004/087226
- GB-A- 834 227
- US-A- 3 898 336
- US-A- 4 529 586
- US-A- 4 621 120
- US-A1- 2004 013 638
- US-A1- 2004 164 018
- US-A1- 2004 164 018
- US-B1- 6 440 405
- E.A.MYATT ET AL.: "Synthesis of Novel Polyethyleneeimine Derivatives by Stepwise, Reversible Blocking of Primary and Secondary Amines", BIOORGANIC CHEMISTRY, vol. 18, 1990, pages 413-424, XP002668486,
- J-LIN ET AL.: "Bactericidal Properties of Flat Surfaces and Nanoparticles Derivatized with Alkylated Polyethyleneamines", BIOTECHNOL. PROGRESS, vol. 18, 2002, pages 1082-1086, XP002668487,
- J.LIN ET AL.: "Mechanism of Bactericidal and Fungicidal Activities of Textiles Covalently Modified With Alkylated Polyethyleneimine", BIOTECHNOLOGY AND BIOENGINEERING, vol. 83, no. 2, 20 July 2003 (2003-07-20), pages 168-172, XP002668488,
- X.CHATELLIER ET AL.: "Adsorption of a Cationic Polyelectrolyte on Escherichia coli Bacteria: 1. Adsorption of the Polymer", LANGMUIR, vol. 17, 2001, pages 2782-2790, XP002668489,
- J. LIN ET AL.: "Insights into bactericidal action of surface-attached poly(vinyl-N-hexypyridinium) chains", BIOTECHNOLOGY LETTERS, vol. 24, 2002, pages 801-805, XP002668490,
- KOURAI H ET AL: 'The Antimicrobial Characteristics of Poly(dimethylimino(polymethylene) chloride)s.' J ANTIBACT ANTIFUNG AGENTS. vol. 22, no. 9, 1994, pages 519 - 530, XP008009295

## Description

### Technical Field

The present invention relates to an antimicrobial and/or antiviral polymer comprising nitrogen atoms. The invention also relates to an antimicrobial and/or antiviral product having at least one surface, wherein such an antimicrobial and/or antiviral polymer is non-covalently adhered at least a part of said surface. The present invention also relates to methods for the manufacture of such antimicrobial and/or antiviral products, as well as compositions for use in the manufacture of such antimicrobial and/or antiviral products.

### Technical background

An antimicrobial and/or antiviral compound is an agent that prevents microbiological contamination by destroying (killing), inhibiting the growth or reproduction of and/or removing microorganisms, such as bacteria, fungi, yeasts, algae, and viruses.

Due to the growing demand for healthy living, there is an interest in different types of antimicrobial/antiviral compounds, which could be coated on surfaces of common objects to render such objects antimicrobial.

Different strategies have been tested for rendering objects antimicrobial/antiviral by the use of antimicrobial/antiviral compounds, for example by impregnating objects, such as different types of textiles with antimicrobial/viral compounds that are gradually released into the surrounding environment over time to kill microorganisms present there.

For several applications however, it is not desired that the antimicrobial/antiviral compound leaks out from the objects, as this contaminates the environment with the antimicrobial/antiviral compound, for example in medical applications, where the antimicrobial/antiviral compound may enter the body of a patient. Furthermore, as the antimicrobial/antiviral function of such a leaking object decreases with time, such an object will be unsuited for repeated use, for example as a dishcloth or the like, where the object may be washed extensively from time to time.

Thus, for many applications, it may be advantageous to virtually irreversibly bind the antimicrobial/antiviral compound to the object, thus making it retaining its antimicrobial/antiviral effect even after washings.

One commonly used class of antimicrobial compounds is quaternary ammonium salts (QAS).

An antibacterial agent and an antibacterial textile product, treated with an antibacterial agent is disclosed in EP 1 269 848 A1, Nicca Chemical Co, Ltd. The antibacterial agent of this approach comprises a polymeric quaternary ammonium salt where the polymer comprises a heteroatom-containing backbone.

However, the proposed polymer is only useable within a rather narrow range of molecular weights, and is produced under rather specific conditions to give a polymer without virtually any possibility to vary anything else than the molecular weight.

The technology of EP 1 269 848 also requires the elaborate synthesis of the antimicrobial polymer from monomers in contrast to the present invention which entails simple chemical modifications of commercially available polymers.

WO 02/085542 to Tiller et al, describes an antimicrobial polymeric surface where an antimicrobial amine-containing polycation is covalently bound to a surface in order to obtain a stable antimicrobial surface to form surface bound quaternary ammonium compounds, with alleged good results (see also Lin et al, "Mechanism of Bactericidal and Fungicidal Activities of Textiles Covalently Modified with Alkylated Polyethyleneimine", Biotechnology and Bioengineering 83 (2003), pp 168-172) [XP002668488], and "Bactericidal Properties of Flat Surfaces and Nanoparticles Derivatized with Alkylated Polyethylenimines", Biotechnol. Prog. 2002, 18, 1082-1086 [XP002668487].

However, in some instances this method requires coating the surface with SiO₂, hydrating the SiO₂-layer to form SiOH-groups, converting the SiOH-groups via treatment with a tri(alkoxi)Si-O-(alkyl)-NH₂-reagent, alkylating the treated groups with a dihaloalkane to form Si-O-(alkyl)-NH-(alkyl)-halide groups. An amine-containing polymer is bound to the halide groups, and finally, the amine groups of the covalently bound polymers are alkylated by means of an alkyl halide.

This method requires a modification of the surface to be used. Such a modification may alter the properties of the material intended for use, and may thus in some applications be undesired.

Further, the surface is exposed to an alkylation step. The dihaloalkane compounds are in general environmentally dangerous and toxic. Moreover, both the surface alkylation step and the polymer-coupling step is performed with strong solvents that may not be suitable for some surfaces, for example some textiles.

The final alkylation of the covalently bound polymers is performed with the use of environmentally dangerous and potentially toxic alkyl halides. Excess of these alkyl halides has to be thoroughly washed out from the product before use.

Moreover, this method is for instance not suited for the production of a surface where a combination of two different species of alkylated polymers is desired, i.e. where a polymer A is alkylated with a side-chain A' and a polymer B is alkylated with a side-chain B'. Such combinations may be desired in some applications, as different species of alkylated polymers may have different antimicrobial activity on different microorganisms.

Thus, there remains a need for an antimicrobial compound, which may be easier and more environmentally safe to produce, and for which the compound properties easily can be varied in accordance with the desired area of usage.

There also remains a need for a method of producing an antimicrobial/antiviral surface, which does not require an extensive surface modification before applying an antimicrobial/antiviral compound.

Moreover, there is a need for a method, which provides more flexibility regarding the application of combinations of antimicrobial compounds.

### Summary of the invention

One object of the present invention is thus to at least partly overcome the drawbacks of the prior art.

The inventors of the present invention have found that certain polycationic polymers may bind virtually irreversibly, however non-covalently, to certain substrate materials, not only negatively charged substrate materials such as glass, etc, but also to uncharged substrate materials, such as for example polypropylene and polyethylene.

This virtually irreversible binding of the polycationic polymer to the substrate may be performed in aqueous solution, to avoid the use of strong solvents.

This effect may be used to bind antimicrobial cationic polymers virtually irreversibly to a surface without the need for surface modifications and without need for covalently binding the polycationic polymers to the surface.

Thus, in a first aspect, the present invention relates to a method for producing an antimicrobial and/or antiviral product, comprising contacting at least one surface of a product with an antimicrobial and/or antiviral polymer, being a straight and/or branched polymer comprising nitrogen atoms. The antimicrobial and/or antiviral polymer is a modified polymer of a precursor polymer, the precursor polymer having a median molecular weight in the range from 25-2000 kDa, said precursor polymer being selected from the group consisting of polymers having the following general formula I and copolymers thereof: 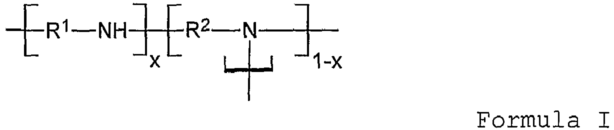 wherein:
R¹ and R² independently are selected from a straight or branched (C₁-C₆) hydrocarbon chain;
x is in the range of from 0 to 1;
the precursor polymer of Formula I comprising two different types of building blocks, one containing secondary amines and one containing tertiary amines wherein the ratio between secondary and tertiary amines determines the degree of branching of the polymer and x, 0 ≤ x ≤ 1, and 1-x represents the portion (%/100) of the corresponding type of building block in the polymer; and
wherein said precursor polymer is modified so that:
at least part of said nitrogen atoms are substituted with a substituent selected from the group consisting of straight or branched C₁-C₂₀-alkyl groups, and
at least part of the nitrogen atoms in said precursor polymer are quaternized, said quaternized nitrogen atoms being substituted with a substituent selected from the group consisting of straight or branched C₄-C₂₀-alkyls, and where the antimicrobial and/or antiviral polymer is water-soluble, the degree of amine function substitution with a (C₁-C₂₀) alkyl group for the antimicrobial and/or antiviral polymer varies with the polymer and the substituents used, and the degree of substitution is taken as the percentage of the amine-functions in the polymer, and the substitution degree is in the range of from 1 to 100%, and the antimicrobial and/or antiviral polymer is non-covalently adhered to the surface of the product avoiding special modification of the surface.

Polymers from this group, with common features that they all are polycationic (due to the quaternization of the nitrogen atoms) and that they contain quaternized nitrogen atoms substituted with a substituent as defined above, show both strong non-covalent binding to surfaces and antimicrobial and/or antiviral effects.

As the polymer is non-covalently bound to the surface of the substrate, no reaction is needed for covalently binding the antimicrobial polymer to the surface. This opens up for avoiding special modification of the surfaces and for more easily carried out production methods.

Further, the antimicrobial and/or antiviral polymers may be produced by modifying commercially available polymers, such as for example poly (ethyleneimine). This makes this approach commercially attractive.

In embodiments of the present invention, the substituents with which said at least part of the nitrogen atoms in the polymer is substituted, are straight or branched C₄-C₂₀-alkyl groups, such as C₄-C₁₈-alkyl groups, for example C₆-C₁₈-alkyl groups.

The C₁-C₂₀-alkylgroups may be saturated or unsaturated, and may optionally further comprise functionalities selected from among alcohols, cycloalkanes, ethers, cyano groups, amides and sulphonamides and other functionalities known to those skilled in the art.

In a preferred embodiment of the present invention, the precursor polymer is a polymer of the general formula I, wherein R¹ and R² are -CH₂CH₂-, i.e. the precursor polymer is polyethyleneimine. The antimicrobial and/or antiviral polymer in this embodiment is thus polyethylene imine where at least part of the nitrogen atoms in the backbone of the polymer is quaternized and at least part of the quaternized nitrogen atoms in the backbone of the polymer is substituted.

The degree of substitution of the quaternized nitrogen atoms in an antimicrobial and/or antiviral polymer of the present invention may be in the range of from 10 to 100%, for example from 10 to 60%.

In the present invention, the precursor polymer is of the general formula I and has a median molecule weight in the range of from 25-2000 kDa, preferably in the range of from 100-1000 kDa, such as about 400 to 900 kDa, typically about 750 kDa.

In embodiments of the present invention at least one additional antimicrobial compound, such as a membrane-destabilizing compound, for example an antimicrobial biguanide, such as PHMB, may be attached to the antimicrobial polymer, for example via a linker. This may further improve the antimicrobial effect of the product.

In a second aspect, the present invention relates to an antimicrobial product, having non-covalently adhered to a part of its surface the antimicrobial and/or antiviral polymer.

The polymers have shown to adhere strongly and non-covalently to the surfaces. Thus, no reaction is needed for binding the antimicrobial polymer to the surface. This opens up for avoiding special modification of the surfaces and for more easily carried out production methods.

In an embodiment of the present invention, the product may have non-covalently adhered to a part of its surface at least two different species of the antimicrobial and/or antiviral polymers. For example, two different species of the antimicrobial and/or antiviral polymers having different effect against different microorganisms/viruses may be adhered to the same surface. Such an arrangement may give a product with effect against a broader spectrum of microorganisms/viruses.

The surface of the product to which the antimicrobial and/or antiviral polymer is adhered, may have any physical form, including, but not limited to, a form selected from the group consisting of fibers, particles, textiles, non-woven, films, filters and combinations thereof. In addition, solid surfaces are suitable for adhering a polymer of the invention thereto.

The material of the product to which the antimicrobial and/or antiviral polymer is adhered, may for example be a material selected from the group consisting of polymers, rubber, glass, metals, ceramics, wood, wool, cotton and combinations thereof.

The present invention relates to methods for the production of antimicrobial and/or antiviral products, wherein a surface of an object is contacted with the antimicrobial and/or antiviral polymer, for the purpose of non-covalently binding the antimicrobial and/or antiviral polymer to the surface.

Disclosed is a composition for use in the manufacture of an antimicrobial and/or antiviral product, which composition comprises at least one of the antimicrobial and/or antiviral polymers, and a solvent therefore.

### Detailed description of the invention

These and other aspects of the present invention will now be discussed more in detail in the following detailed description of preferred embodiments and in the following examples.

As used herein, the term "quaternized", for example in the context of quaternized nitrogen atom or amine function, etc, relates to a positively charged moiety comprising a nitrogen atom, which binds to carbon atoms via four covalent bonds. Typically, the nitrogen atom binds to four carbon atoms via four single bonds, thus becoming positively charged. However, a quaternized nitrogen atom may also bind to less than four carbon atoms, such as three carbon atoms, where one of the carbon atoms are bound by a double bond.

As used herein, the term "quaternized amine function substituted with a substituent selected from...", for example in the context of a quaternized amine function substituted with a Cₙ-alkyl group, and the term "quaternized nitrogen atom substituted with a substituent selected from..." is to be taken as that at least one substituent of the alleged type, which substituent is not part of the polymer backbone, is bound to a nitrogen atom of an amine function.

The term "polymer with quaternized amine function", and the term "polymer with quaternized nitrogen atoms", as used herein refers to a compound of the general formula: 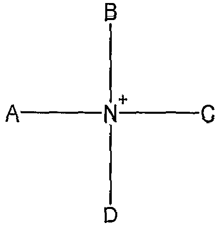 wherein at least one of the residues "A", "B", "C" and "D" is part of the repeating unit of the polymer, and wherein that or those residues of "A"-"D" not comprised in the polymer repeating unit, i.e. not being constituted by monomers or polymers being building blocks of the precursor polymer, is the residue forming a stable covalently formed cationic quaternary compound with the nitrogen.

The term "non-covalent" as used herein, for example in the context of non-covalent binding of an antimicrobial and/or antiviral polymer to a surface, refers to a bond between two chemical moieties, which is not formed by covalent binding. Examples of different types of non-covalent bonds include, but are not limited to, ion bonds, hydrogen bonds and bonds due to van der Waals forces, Coloumb forces and/or London forces.

The term "antimicrobial", as used herein, refers to the capability of an article to destroy (kill), inhibit the growth or reproduction of, immobilize and/or remove microorganisms, for example bacteria, fungi, yeasts and algae.

The term "antiviral" as used herein, refers to the capability of an article to destroy (kill), inhibit the growth or reproduction of, immobilize and/or remove viruses.

The term "two different species of antimicrobial and/or antiviral polymers", as used herein, refers to a first and a second antimicrobial polymer where the polymer backbone composition, the molecular weight or the substituent composition or degree differs between the two polymers.

The present invention is in general based on the finding that certain cationic, amine function comprising polymers have an antimicrobial and/or antiviral activity, especially when bound to surfaces, and that these polymers can bind strongly and non-covalently to many surfaces.

Based on this activity, the present invention also relates to antimicrobial and/or antiviral products, having at least one surface to which the antimicrobial and/or antiviral polymer is non-covalently adhered.

In further aspects, the present invention also relates to methods for the manufacture of such products. Disclosed are compositions for use in the manufacture of such products.

Antimicrobial and/or antiviral polymers suitable for use in the present invention are preferably polycationic.

Most microbial cells are negatively charged and hydrophobic. Thus, most microorganisms are attracted to positively charged hydrophobic surfaces. In addition, virions are attracted to positively charged hydrophobic surfaces of the present invention.

Without being bound by any theory, it is believed that the cationic polymer adhered to the substrate surface according to the invention provides an increased positive surface charge density on the substrate surface. The increased positive surface charge density in turn provides increased electric field strength in a specific medium, such as air.

The increased positive surface charge density results in an increased microorganism/virus adhesion, thus preventing leakage of live microorganisms/virions from the substrate surface.

Not whishing to be bound by any specific theory, the negative surface charge of microorganisms seems to be a common feature although the charged molecules vary between the species.

The cell walls of fungi contains acid polysaccharides that are negatively charged, yeast contain mannoproteins with phosphorylated mannosyl side chains rendering a net anionic charge and the cell wall of algae contain pectins, a polysaccharide with negatively charged galacturonic acid residues.

In addition, many virions display a net negative on the surface due to exposure of negatively charged amino acids on proteins in the capsid of the virus. The membrane of enveloped viruses such as Herpes simplex virus and the human immunodeficiency virus (HIV), contain glycoproteins with sialic acid groups that are negatively charged at physiological pH. Therefore the electrostatic attraction of different classes of virions to the positively charged polymer, is likely to be very distinct. Consequently, antifungal, antialgae, antiyeast as well as antiviral properties are expected in addition to the evidenced antibacterial effects from substrates to which the antimicrobial polymer is adhered

Polymers suitable for use in all aspects of the invention include straight and/or branched antimicrobial and/or antiviral polymers comprising nitrogen atoms, being modified polymers of a precursor polymer, the precursor polymer having a median molecular weight in the range from 25-2000 kDa, said precursor polymer being selected from the group consisting of polymers having the following general formula I and copolymers thereof: 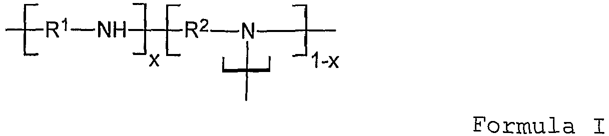 wherein:
R¹ and R² independently are selected from a straight or branched (C₁-C₆) hydrocarbon chain;
x is in the range of from 0 to 1;
the precursor polymer of Formula I comprising two different types of building blocks, one containing secondary amines and one containing tertiary amines wherein the ratio between secondary and tertiary amines determines the degree of branching of the polymer and x, 0 ≤ x ≤ 1, and 1-x represents the portion (%/100) of the corresponding type of building block in the polymer;
wherein said precursor polymer is modified so that:
   at least part of said nitrogen atoms are substituted with a substituent selected from the group consisting of straight or branched C₁-C₂₀-alkyls, and
   at least part of the nitrogen atoms in said precursor polymer are quaternized, said quaternized nitrogen atoms being substituted with a substituent selected from the group consisting of straight or branched C4-C20-alkyls, and where the antimicrobial and/or antiviral polymer is water-soluble, the degree of amine function substitution with a (C1-C20) alkyl group for the antimicrobial and/or antiviral polymer varies with the polymer and the substituents used, and the degree of substitution is taken as the percentage of the amine-functions in the polymer, and the substitution degree is in the range of from 1 to 100%.

Examples of precursor polymers of the general formula I includes for example poly(ethyleneimine), poly(propyleneimine) and poly(butyleneimine).

Antimicrobial and/or antiviral polymers based on precursor polymers of the general formula I are modified such that at least part of the nitrogen atoms in the backbone are quaternized, where at least part of the quaternized nitrogen atoms are bonded to a (C₄-₂₀) alkyl group, for example a (C₄-C₁₈) alkyl group, typically a (C₆-C₁₈) alkyl group or a (C₆-C₁₂) alkyl group.

The precursor polymer of Formula I comprises two different types of building blocks (monomers), one containing secondary amines and one containing tertiary amines. The ratio between secondary and tertiary amines determines the degree of branching of the polymer and x, 0 ≤ x ≤ 1, and 1-x represents the portion (%/100) of the corresponding type of building block in the polymer.

The above mentioned alkyl groups are typically unsubstituted, saturated or unsaturated, straight or branched alkyl groups, but may however in some instances optionally comprise functionalities selected from among alcohols, cycloalkanes, ethers, cyano groups, amides and sulphonamides and other functionalities known to those skilled in the art.

Preferred alkyl groups from the above-mentioned are straight and branched saturated alkyls.

In an antimicrobial and/or antiviral polymer based on a precursor polymer of formula I, at least part of the nitrogen atoms in the polymer backbone are quaternized and at least part of the quaternized nitrogen atoms are substituted as described herein.

In a polymer of the general formula I, R¹ and R² may independently typically be a straight or branched, saturated or unsaturated, hydrocarbon chain, such as for example -(CH₂)ₙ-, or branched or unsaturated variants thereof.

One example of an antimicrobial and/or antiviral polymer based on a precursor polymer of the general formula I is schematically shown in formula Ia below, wherein the secondary nitrogen atom in the precursor polymer is substituted with a hexyl group chain and wherein both the secondary and the tertiary nitrogen atoms in the precursor polymer are quaternized by means of methyl (-CH₃) groups.

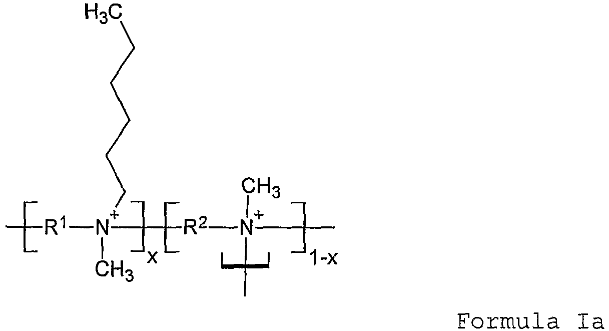

The degree of amine function substitution with a (C₁-C₂₀) alkyl group for the antimicrobial and/or antiviral polymer suitable for use with the present invention will vary with the polymer and the substituents used. The degree of substitution is taken as the percentage of the amine-functions in the polymer, which are substituted.

The substitution degrees are in the range of from 1 to 100%, typically from 10 to 90%, such as from 10 to 60%, for example from 20 to 40%.

Substituents for use in the present invention include, but are not limited to straight or branched, saturated or unsaturated alkyl groups, such as for example methyl, n-hexyl, tert-hexyl, dodecyl, octadecyl, which optionally are substituted to comprise other functionalities, such as cycloalkane rings, alcohols (OH), ethers, cyano groups, amides and sulphonamides. Saturated alkyls and arylalkyls are preferred.

The substituents, e.g. alkyls or alkylaryls, are in general hydrophobic and the higher the substitution degree, the more hydrophobic the polymer gets. However, the quaternization renders the polymer positively charged and more hydrophilic, and thus, a polymer with desired water solubility may be obtained by balancing the substitution, e.g. degree of alkylation and the degree of quaternization.

Methods for substituting the amine functions of the polymer are known to those skilled in the art, and involve typically the use of halide derivates of the substituent-residues, such as for example incubating the polymer with hexyliodide in the case of hexylation of the amine function. Alternatively, reactive oxides of the substituent may also be used, such as for example alkylene oxide.

The degree of substitution will vary with the polymer used, the reaction conditions and the substituents.

Further, at least part of the amine-functions in the polymer that are substituted as discussed above are quaternized, i.e. forms a stable quaternary positively charged residue. Both unsubstituted amine functions and substituted amine functions (i.e. substituted with a substituent as defined above) may be quaternized. The amine functions are preferably quaternized by a methyl, ethyl or propyl group, typically methyl.

Methods for quaternization of the amine functions of the polymer are known to those skilled in the art, and involve typically the use of halides derivates of the quaternizing residue, such as for example incubating the polymer with methyl iodide in the case of methyl-quaternization. Alternatively, reactive oxides of the quaternizing residue may also be used, such as for example ethylene oxide

The degree of quaternization of the antimicrobial polymer suitable for use with the present invention will vary with the polymer used.

Representative method for substitution and quaternization of an amine-containing polymer is shown in the experiments below.

The substitution (e.g. alkylation) and quaternization of the antimicrobial polymer may be performed as a step, which is separate from and prior to the step of contacting the antimicrobial polymer with the surface of the substrate. Thus, the substituted and optionally quaternized antimicrobial polymer may be provided as a bulk chemical for subsequent contacting with a substrate.

A special case occurs when the substitution, as described above, is performed with substitution agents that also are potent quaternization agents, such as for example methyl-, ethyl- or propyl-halides. From above, such agents are described both as substitution and as quaternization agents. Thus, for example if the substitution reaction is performed with methyl iodide as substitution agent, the quaternization reaction is inherent in this substitution reaction.

In another case, when a tertiary nitrogen atom is substituted with a substituent as mentioned above, the substitution also constitutes a quaternization. Thus, for tertiary nitrogen atoms, the substitution and quaternization is the same step. However, as the substitution degree may be less than 100 %, especially for larger substituents (C₄ alkyl groups and larger) a subsequent quaternization step may be performed to achieve a higher quaternization degree.

In certain embodiments of the present invention, an additional antimicrobial compound, such as for example a membrane-destabilizing biguanide, for example PHMB may further be attached, covalently or non-covalently, to the antimicrobial polymer. Suitable antimicrobial compounds include both polymeric and non-polymeric compounds. The attachment of such an additional antimicrobial compound may increase the antimicrobial effect of an antimicrobial product of the present invention.

Several such antimicrobial compounds are known, and suitable methods for attaching those to the antimicrobial polymer will be apparent to those skilled in the art.

Solvents for the polymer will, as is apparent to those skilled in the art, vary with the chemical structure, molecular weight, etc of the polymer. However, the antimicrobial and/or antiviral polymer is water-soluble. Other suitable solvents include organic solvents.

A suitable concentration of the polymer in the solvent for adhering the polymer to a substrate will depend on the nature of the polymer, the solvent and the substrate, but may typically be in the range of 0,01 to 1 % by weight, such as from 0,05 to 1 % by weight.

In some embodiments of the present invention, the solution may comprise at least two different species of the antimicrobial polymers, with the result that the two species will adhere to the same substrate, forming an antimicrobial product having at least two different antimicrobial polymers adhered to its surface.

The molecular weight of an antimicrobial and/or antiviral polymer of the present invention will vary, as apparent to those skilled in the art, with the type of precursor polymer used and with the substitution degree and substituent composition.

As used herein, the term "molecular weight" relates to the mean molecular weight of the polymer. The mean molecular weight is to be taken as the weight averaged molecular weight.

In general, the molecular weight of the polymer is chosen, taking into consideration and balancing the solubility of the polymer, the surface binding properties and the antimicrobial/antiviral properties. Thus, the molecular weight of the precursor polymer is in the range of from 25 kDa to 2000 kDa.

For example, when poly(ethyleneimine) is used as the precursor polymer, a molecular weight of that precursor polymer is in the range of from about 25 to 2000 kDa, such as in the range of from 100 to 1000 kDa. Promising results have been obtained using a poly(ethyleneimine) having a molecular weight of approximately 750 kDa.

A composition comprising an antimicrobial polymer as described above, may for example be formulated in or as a washing agent or a rinsing agent, such as a washing or rinsing agent used in the washing of textiles, etc. For example, wear of a textile, such as clothing or other textile products, having an antimicrobial and/or antiviral surface, will eventually cause the antimicrobial effect to decrease, either due to that the antimicrobial/antiviral agent becomes "saturated" and/or that the agent is removed, for example due to abrasion.

Thus, it may be desirable to renew the antimicrobial/antiviral activity of the textile by washing or rinsing it in a solution containing antimicrobial/antiviral polymer such that a reactivated active surface is obtained. As will be realized by those skilled in the art, this approach may also be used to apply the antimicrobial/antiviral polymer to a previously untreated textile. In addition, this washing or rinsing agent approach is also applicable to other substrates than-textiles, as will be realized by those skilled in the art.

Such a washing or rinsing agent may further comprise other components usually found in such agents, as long as the antimicrobial/antiviral polymer in the agent is capable to bind to the washed/rinsed item.

A composition may also be formulated into a composition, which can be sprayed, for example in the form of an aerosol, upon the surface in order to bind thereto to form an antimicrobial and/or antiviral product.

Not wishing to be bound to any theory, one possible cause of the high affinity of especially bacteria to a product of the present invention is the net negative lipopolysaccharide or teichoic acid layer that virtually every bacteria possess.

The outer cell membrane of all Gram-negative bacteria contain lipopolysaccharides (LPS), some of which are referred to as endotoxins that are highly toxic to humans. Occurrence of endotoxins is therefore undesired, for example in the manufacture of pharmaceuticals, and the like.

Especially when Gram-negative bacteria die, high amounts of endotoxins are released to the surroundings.

Since endotoxins are lipopolysaccarides, the component believed to be the electrostatically attracting agent of living bacteria to the polymer surface, products of the present invention may also be used to immobilize free endotoxins. For example, when bacteria which are immobilized on a product surface of the present invention, endotoxin released from the bacteria while immobilized will also be immobilized on the surface of the product. Support for this hypothesis is provided in an experiment below, where strong interaction was noted in solution between free endotoxins and polymers of the present invention.

The product surfaces for use in the present invention may be of any material to which the polymer is capable of adhering non-covalently, but include for example natural fibers, such as fibers of cotton, cellulose, stone, glass and wool, synthetic fibers, such as polymeric fibers, e.g. polyamides and polyolefins, composite fibers, natural and synthetic polymers, rubber, glass, metals, ceramics and any combination thereof. Other suitable materials will be apparent to those skilled in the art.

The antimicrobial and/or antiviral polymer may preferably be non-covalently adhered to the surface of the product by merely contacting the surface with the solution containing antimicrobial polymer, for example by dipping, soaking, spraying, etc. One representative method of contacting the polymer solution with the surface of the product is shown in the experiments below.

The product according to the invention adsorbs, and/or absorbs, and retains microbes, such as bacteria, fungi and/or viruses.

The product according to the invention can thus be used for removing microorganisms from surfaces, such as biological surfaces, including skin and wounds, construction surfaces, including building surfaces, furniture surfaces and automotive surfaces, air and water.

Examples of microbes being adsorbed/absorbed and retained by a product according to the invention are bacteria, such as, but not limited to, *Staphylococcus* strains, such as *Staphylococcus aureus,* Streptococcus strains, *Legionella* strains, *Fusarium* strains, *Salmonella* strains, Shigella strains, Yersinia strains, *Escherichia coli, Bacillus cereus, Campylobacteria, Clostridium botulinum, C. perfringes, Listeria monocytogenes;* viruses, such as but not limited to, RNA and DNA viruses, such as calcivirus, enterovirus, retrovirus, Norwalk virus, HIV-virus, and other pathogenic and non-pathogenic viruses; fungi, such as, but not limited to, *Penicillum* and *Aspergillus;* yeast, such as *Saccharomyces* and *Candida* strains; algae such as *Volvox* strains, *Spiragyra* strains and *Chlamydomonas* strains.

Products of the present invention have been shown to exhibit strong antimicrobial/antiviral effect and further, antimicrobial/antiviral polymers of the present invention have been shown to be strongly bound to the surface of the product (see examples below).

The potential areas for use of an antimicrobial/antiviral product of the present invention are multiple.

In one embodiment of the present invention, equipment involved in food handling, such as kitchen knives, cutting-boards and bench-tops, may constitute a substrate having an antimicrobial surface according to the present invention. As several foodstuffs are potential sources for pathogens, for instance Salmonella and Campylobacter in chicken, it may be advantageous if equipment for handling such foodstuffs is antimicrobial.

Other examples of applications (substrates) include sanitary equipment, such as a surface cleansing cloths for hard or semi-hard surfaces (e.g. furniture, walls, floors, etc) or a mop textile; water and air filters, such as for use in breathing masks and in venting systems in prenatal incubators, buildings or vehicles; liquid absorbing material in food packages; clothing, including training clothes, such as intimate apparel, stockings and socks; protective clothing, including different working clothes, such as cooking, laboratory and medical/surgical clothes; shoes, including shoe soles; sanitary articles, such as sanitary napkins, panty liners, diapers, and incontinence guards; refreshers/wet wipes; napkins; handkerchiefs; paper and textile towels; wound compresses/cloths (for instance, for treatment of eczema and burn injuries); adhesive dressings; plaster; medical/surgical cloths/clothing, face masks and coverings, including pre-surgery coverings and paper and plastic film coverings for medical examination tables; plastic film for use in a laboratory; agricultural plastic film for storage of hay; coverings in general; articles of beddings, such as sheets, quilts, blankets, quilt covers, mattress covers, pillows, and pillow cases; fibrous, plastic and rubber gloves, including disposable gloves, such as latex and PVC ; containers, wrappings, and bags/sacks, including food packaging (e.g. plastic film) and storage of other objects, such as sand and dirty washing; cellulosic articles, such as cellulose, pulp, fluff, tissue, paper and paperboard; banknotes, bank cheques, identification papers, such as passports and driving licenses; suitcases; interior equipment in automobiles, airplanes, busses and trains; telephone earpieces and internet terminals.

It will be apparent to those skilled in the art that certain modifications to and variants of the above-described matter are possible within the scope of the appended claims. For example, a solution comprising the antimicrobial/antiviral polymer may further be provided in an applicator, such as for example in a sponge, and the sponge may then be used to apply the antimicrobial/antiviral polymer on a surface, whereby it binds non-covalently to the surface, rendering it antimicrobial/antiviral.

To summarize, an antimicrobial and/or antiviral polymer is provided. The polymer is a modified polymer of a precursor polymer that comprises nitrogen atoms. The precursor polymer is modified into the antimicrobial and/or antiviral polymer by substituting at least part of the nitrogen atoms with a (C₁-C₂₀) alkyl group and quaternizing at least part of the substituted nitrogen atoms.

Such antimicrobial and/or antiviral polymers bind strongly and non-covalently to surfaces, rendering the surface antimicrobial and/or antiviral.

### Experiments

The invention will now be illustrated by means of the following non-limiting experiments.

### Experiment 1: Synthesis of alkylated and quaternized PEI

### Hexylation of PEI in aqueous media:

PEI (polyethylenimine) (25.20 g; 50% in H₂O; Mw 750 000 Da) was diluted in MQ-H₂O (150 mL). Hexylbromide (23 mL, 0.164 mol) was added. The reaction mixture was vigorously stirred and heated at approximately 60°C for 48 h, during which time the solution turned clear.

Extraction with chloroform, followed by separation and drying in at atmospheric pressure, 20°C, of the organic phase, yielded a residue of less than 0.5% of the original hexylbromide, indicating that the alkylation reaction virtually went to completion. H₂O was partially evaporated. The remaining H₂O was removed by distillation with toluene in a Dean-Stark trap. The toluene was evaporated yielding a yellow sticky residue.

### Methylation of hexylated PEI (PEI6m):

Hexylated PEI (1.00 g) was dissolved in methanol (50 mL). Triethylamine (4 mL, 29.7 mmol) and MeI (2 mL, 32.1 mmol) was added. The reaction mixure was refluxed for 5 h, left over night and refluxed for 6 h. The solvent was evaporated and the residue was redissolved in toluene, which was then evaporated.

### Octadecylation and methylation of PEI (PEI18m):

Tetrahydrofuran (100 mL) was added to freeze dried PEI (approx. 2.5 g, 57.3 mmol). Triethylamine (16 mL, 0.11 mol) and octadecylbromide (1.92 g, 5.7 mmol) was added and the reaction mixture was refluxed for 6 h. The reaction was cooled to room temperature and MeI (7 mL, 0.11 mol) was added. As the addition of MeI resulted in an exothermal reaction, MeI was added slowly and the reaction mixture was cooled on an ice bath.

The solvent was evaporated and the residue was redissolved in toluene and evaporated.

### Experiment 2: Adsorption to substrates and visualization thereof

The modified PEIs from experiment 1 were dissolved in MQ-H₂O and diluted to a concentration of 0.25% (w/w). Six different materials were selected (see Table 1) and immersed during shaking in a Wrist Action Shaker (Bibby Sterlin Ltd, SF1) for 40 min (500 opm) in 25 ml of the PEI solution.

**Table 1**

| |
|---|
| Cotton (white textile fabric, 2.5g) |
| Polyester (white filter, 2.5g) |
| Polypropylene (untreated nonwoven, 2.5g) |
| Glass (beads, total area of ∼60 cm²) |
| Rubber (latex, gloves cut in pieces, total area of ∼60 cm²⁾ |
| Steel (steel wool, 1g) |

The substrates were then rinsed extensively with MQ-H₂O and dried at room temperature. For visualization of PEI adsorbed to the surfaces of the substrates, the dye bromophenol blue, which forms complexes with quaternary ammonium moieties (Yamamoto, Analytica Chimica Acta 302, 75-79 (1995)) was used. Incubation with a carbonate-buffered, 0.001% (w/v) solution of bromophenol blue followed by thorough rinsing with MQ-H₂O rendered all PEI6m- and PEI18m-modified substrates clearly blue in appearance, while unmodified samples were not colored at all.

### Experiment 3: Assay of the antibacterial effect using the ASTM E2149-01 test

Three of the materials were selected for assessment of the antibacterial effect: cotton, polyester and polypropylene. For evaluation of the antibacterial effect of the modified substrates, the ASTM E2149-01 "Standard Test Method for Determining the Antimicrobial Activity of Immobilized Antimicrobial Agents under Dynamic Contact Conditions" was applied.

Briefly, 0.5 g of material was incubated in 25 ml 0.3 mM phosphate buffer, pH 7 containing 1.5-3*10⁵ cfu/ml of bacteria (Escherichia coli, CCUG 10979, or Staphylococcus aureus, CCUG 1800) in 50 ml Falcon tubes during shaking on a Wrist Action Shaker (Bibby Sterlin Ltd, SF1) at 500 opm.

A sample was taken from the bacterial solution before adding the material and another sample was taken after the 1-hour incubation. The samples were diluted and spread on LB/agar plates and incubated over night. Colonies were counted and the bacterial reduction calculated.

For both the Gram-negative *E. coli* and the Gram-positive *S. aureus,* excellent antibacterial effects were obtained for the hexylated as well as the octadecylated, quaternized PEI (Table 2).

**Table 2**

| | Cotton | Polyester | Polypropylene |
|---|---|---|---|
| *E. coli* | | | |
| PEI6m | >99 | >99 | >99 |
| PEI18m | 97 | 98 | >99 |
| Untreated control | 0 | 0 | 0 |
| | | | |

| *S. aureus* | | | |
|---|---|---|---|
| PEI6m | >99 | >99 | >99 |
| PEI18m | >99 | >99 | >99 |
| Untreated control | 0 | 0 | 0 |

### Experiment 4: Assessment of the durability

The strength of the adsorption of PEI6m and PEI18m was evaluated by additional tests of the antibacterial effect (using *E*. *coli,* ASTM E2149-01) after washing with a detergent (for the cotton textile) or with a highly concentrated NaCl solution (for the polyester and polypropylene samples).

The cotton sample (0.5 g) was shaken for 30 min in 25ml (in a 50 ml Falcon tube) of tap water (60°C) with detergent added (Reference detergent 6.1.2 in the ISO 15797:2002(E) standard, used at 5g/l) on a Wrist Action Shaker (Bibby Sterlin Ltd, SF1) at 500 opm. It was then rinsed extensively in warm tap water and MQ-H₂O.

The other samples were shaken for 30 min in 25ml (in a 50 ml Falcon tube) of a 1 M NaCl solution, buffered at pH 8 with 10 mM sodium phosphate buffer, before being extensively rinsed in MQ-H₂O. After this washing, the samples exhibited a retained, high antibacterial effect in the ASTM test (Table 3).

In addition, all materials (including the glass, rubber and steel samples after 1M NaCl washing) were assayed with the bromophenol blue dye upon washing and rinsing. No significant change in the blue coloration of any sample material could be detected. These results show that the polymer is very strongly adsorbed to its substrate surface.

**Table 3**

| | Cotton (detergent) | Polyester (NaCl) | Polypropylene (NaCl) |
|---|---|---|---|
| *E. coli* | | | |
| PEI6m | >99 | >99 | >99 |
| PEI18m | >99 | 95 | >99 |
| Untreated control | 0 | 0 | 0 |

### Experiment 5: Synthesis of hexylated and quaternized polyallylamine (PAA) (comparative, not forming part of the invention)

### Hexylation of PAA:

PAA·HCl (5,6 g; 0,06 mol monomer) was dissolved in 50 ml of CH₃OH. Solid Na₂CO₃ (0,06 mol; 6,36 g) was added and the mixture was stirred for 1 hour giving the free amine. n-Hexylbromide (3 ml; 0,02 mol) was added to the methanol solution and the reaction mixture was refluxed for 24 hours. After that the reaction mixture was cooled to room temperature, 5 ml of 4M NaOCH₃ in CH₃OH was added to the reaction mixture over a 10 min. period and the reaction mixture was stirred for 1 hour. The color of the reaction mixture remained white. The whole reaction mixture (∼60 ml) was used in the next step without further purification.

### Methylation of hexylated PAA (PAA6m):

At first, CH₃I (7,5 ml; 0,12 mol) was dropwise added slowly at 43°C to the stirred reaction mixture over 15 min and then the reaction mixture was refluxed for 1,5 hours. The heating was removed and 5 ml of 4M NaOCH₃ in CH₃OH was added with stirring to the reaction mixture. The mixture was left over night, yielding a slightly turbid solution. Then the reaction mixture was refluxed for 2 hours and 13 ml of 4M NaOCH₃ in CH₃OH was added in small portions (∼5 ml) over 15 min to the refluxing solution. During addition the boiling point of the solution increased. After addition of all 4M NaOCH₃ in CH₃OH the reaction mixture was refluxed an additional 0,5 hour, cooled to room temperature and poured into 150 ml of methyl-tert-butyl ether (MTBE). A white solid precipitated that was filtered by suction on a Büchner funnel and washed with 70 ml of MTBE. The product was dried in air at room temperature 24 hours.

### Experiment 6: Adsorption of PAA6m to substrates and visualization thereof (comparative, not forming part of the invention)

The PAA6m from experiment 5 was dissolved in MQ-H₂O and diluted to a concentration of 0.1% (w/w). Six different materials (see Table 1) were immersed during shaking in a Wrist Action Shaker (Bibby Sterlin Ltd, SF1) for 40 min (500 opm) in 25 ml of the PAA6m solution. The substrates were then rinsed extensively with MQ-H₂O and dried at room temperature. For visualization of PAA6m adsorbed to the surfaces of the substrates, the dye bromophenol blue was used. Incubation with a carbonate-buffered, 0.001% (w/v) solution of bromophenol blue followed by thorough rinsing with MQ-H₂O rendered all PAA6m-modified substrates clearly blue in appearance, while unmodified samples were not colored at all.

### Experiment 7: Assay of the antibacterial effect of hexylated and quaternized polyallylamine using the ASTM E2149-01 test (comparative, not forming part of the invention)

Three of the materials were selected for assessment of the antibacterial effect: cotton, polyester and polypropylene. For evaluation of the antibacterial effect of the modified substrates, the ASTM E2149-01 "Standard Test Method for Determining the Antimicrobial Activity of Immobilized Antimicrobial Agents under Dynamic Contact Conditions" was applied (see Experiment 3).

For both the Gram-negative *E*. *coli* and the Gram-positive *S. aureus,* excellent antibacterial effects were obtained for the PAA6m (Table 4).

**Table 4**

| | Cotton | Polyester | Polypropylene |
|---|---|---|---|
| *E. coli* | | | |
| PAA6m | >99 | >99 | >99 |
| Untreated control | 0 | 0 | 0 |
| | | | |

| *S. aureus* | | | |
|---|---|---|---|
| PAA6m | >99 | >99 | >99 |
| Untreated control | 0 | 0 | 0 |

### Experiment 8: Synthesis of hexylated and quaternized polyvinylpyridine (PVPy) (comparative, not forming part of the invention)

### Hexylation of PVPy:

PVPy (25 g; 0,24 mol monomer) was dissolved in 100 ml of CH₃OH; n-hexylbromide (10,3 ml; 0,073 mol) was added to the methanol solution and the reaction mixture was refluxed for 24 hours. Then the reaction mixture was cooled to room temperature, 18 ml of 4M NaOCH₃ in CH₃OH was added to the reaction mixture over a period of 10 min, and the reaction mixture was stirred for an additional hour. The color of the reaction mixture changed from white to deep green. The whole reaction mixture (∼120 ml) was used in the next step without further purification.

### Methylation of hexylated PVPy (PVPy6m):

At first, CH₃I (30 ml; 0,48 mol) was dropwise added slowly at 43°C to the stirred reaction mixture. After the addition of 6 ml, remaining CH₃I was added in one operation and the reaction mixture was refluxed for 2 hours. The heating was removed and 6 ml of 4M NaOCH₃ in CH₃OH was added with stirring to the reaction mixture. The mixture was left over night, yielding a slightly turbid solution. Then the reaction mixture was refluxed for 1 hour and 42 ml of 4M NaOCH₃ in CH₃OH was added in small portions (∼5 ml) over 30 min to the refluxing solution. During addition, the boiling point of the solution increased. After addition of all 4M NaOCH₃ in CH₃OH, the reaction mixture was refluxed for an additional 1 hour, cooled to room temperature and poured into 250 ml of methyl-tert-butyl ether (MTBE). A green solid precipitated, which was filtered by suction on a Büchner funnel and washed with 100 ml of MTBE. The product was dried in air at room temperature 24 hours.

### Experiment 9: Adsorption of PVPy6m to substrates and visualization thereof (comparative, not forming part of the invention)

The PVPy6m from experiment 8 was dissolved in MQ-H₂O and diluted to a concentration of 0.1% (w/w). Six different materials (see Table 1) were immersed during shaking in a Wrist Action Shaker (Bibby Sterlin Ltd, SF1) for 40 min (500 opm) in 25 ml of the PVPy6m solution. The substrates were then rinsed extensively with MQ-H₂O and dried at room temperature. For visualization of PVPy6m adsorbed to the surfaces of the substrates, the dye bromophenol blue was used. Incubation with a carbonate-buffered, 0.001% (w/v) solution of bromophenol blue followed by thorough rinsing with MQ-H₂O rendered all PVPy6m-modified substrates clearly blue in appearance, while unmodified samples were not colored at all.

### Experiment 10: Assay of the antibacterial effect of hexylated and quaternized polyvinylpyridine using the ASTM E2149-01 test (comparative, not forming part of the invention)

Three of the materials were selected for assessment of the antibacterial effect: cotton, polyester and polypropylene. For evaluation of the antibacterial effect of the modified substrates, the ASTM E2149-01 "Standard Test Method for Determining the Antimicrobial Activity of Immobilized Antimicrobial Agents under Dynamic Contact Conditions" was applied (see Experiment 3).
For both the Gram-negative *E. coli* and the Gram-positive *S. aureus,* excellent antibacterial effects were obtained for the PVPy6m (Table 5).

**Table 5**

| | Cotton | Polyester | Polypropylene |
|---|---|---|---|
| *E. coli* | | | |
| PVPy6m | >99 | >99 | >99 |
| Untreated control | 0 | 0 | 0 |
| | | | |

| *S. aureus* | | | |
|---|---|---|---|
| PVPy6m | >99 | >99 | >99 |
| Untreated control | 0 | 0 | 0 |

### Experiment 11: Assessment of endotoxin inactivation in aqueous solution

Endotoxin inactivation by PEI6m in a turbidimetric assay was assessed to detect any interaction of the polymer with endotoxins in aqueous solution. The Kinetic Turbidimetric LAL kit from Charles River Laboratories was used with 0.05 EU/ml endotoxin concentration and a concentration of 0.1% PEI6m (by weight) from example 1 in the sample solution.

The test indicated a 100% inactivation of the endotoxin activity, indicating a strong interaction between PEI6m and endotoxins.

It can thus also be expected that endotoxins will be immobilized and inactivated on substrates to which PEI6m is adhered.

## Claims

1. A method for producing an antimicrobial and/or antiviral product, comprising,
contacting at least one surface of a product with an
antimicrobial and/or antiviral polymer, being a straight and/or branched polymer, comprising:
nitrogen atoms,
wherein the antimicrobial and/or antiviral polymer is a modified polymer of a precursor polymer, the precursor polymer having a median molecular weight in the range of from 25-2000 kDa, said precursor polymer being selected from the group consisting of polymers having the following formula I and copolymers thereof: 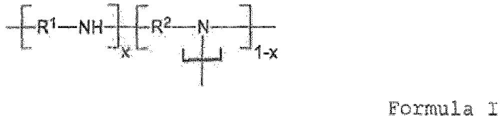
wherein:
R¹ and R² independently are selected from a straight or branched (C₁-C₆) hydrocarbon chain;
x is in the range of from 0 to 1 ;
the precursor polymer of Formula I comprising two different types of building blocks, one containing secondary amines and one containing tertiary amines wherein the ratio between secondary and tertiary amines determines the degree of branching of the polymer and x, 0 ≤ x ≤ 1, and 1-x represents the portion (%/100) of the corresponding type of building block in the polymer ; and
wherein said precursor polymer is modified so that
at least part of said nitrogen atoms are substituted with a substituent selected from the group consisting of straight or branched C₁-C₂₀-alkyl groups, and
at least part of the nitrogen atoms in said precursor polymer are quaternized, said quaternized nitrogen atoms being substituted with a substituent selected from the group consisting of straight or branched C₄-C₂₀-alkyls, and where the antimicrobial and/or antiviral polymer is water-soluble,
the degree of amine function substitution with a (C₁-C₂₀) alkyl group for the antimicrobial and/or antiviral polymer varies with the polymer and the substituents used, and the degree of substitution is taken as the percentage of the amine-functions in the polymer, and the substitution degree is in the range of from 1 to 100%, and
the antimicrobial and/or antiviral polymer is non-covalently adhered to the surface of the product avoiding special modification of the surface.

2. The method according to claim 1, wherein said quaternized nitrogen atoms are substituted with a substituent selected from the group consisting of straight or branched C₆-C₁₈-alkyls.

3. The method according to claim 1, wherein R¹ and R² are -CH₂CH₂-.

4. The method according to claim 1, wherein the substitution degree is from 10 to 100%.

5. The method according to claim 4, wherein the substitution degree is from 10 to 60%.

6. The method according to claim 1, wherein at least one antimicrobial and/or antviral compound is attached to said antimicrobial polymer and/or antiviral polymer.

7. The method according to claim 6, wherein said antimicrobial and/or antiviral compound is a membrane-destabilizing compound.

8. The method according to claim 7, wherein said antimicrobial and/or antiviral compound is an antimicrobial biguanide.

9. An antimicrobial and/ or antiviral product having at least one surface, wherein an antimicrobial and/or antiviral polymer according to claim 1 is non-covalently adhered to at least a part of said surface.

10. The product according to claim 9, having non-covalently adhered to a part of its surface at least two different species of antimicrobial and/or antiviral polymers.

11. The product according to claim 9, wherein the surface, to which said antimicrobial and/or antiviral polymer is adhered, is in a form selected from the group consisting of fibers, particles, textiles, non-woven, films, filters and combinations thereof.

12. The product according to claim 9, wherein said surface, to which said antimicrobial and/or antiviral polymer is adhered, is of a material selected from the group consisting of polymers, rubber, glass, metals, ceramics, wood, wool, cotton and combinations thereof.

13. The method according to claim 1, comprising:
(i) providing an object having a surface to which an antimicrobial and/or antiviral polymer according to any of the claims 1 to 9 can non-covalently adhere; and
(ii) contacting said object with an antimicrobial and/or antiviral polymer according to any of the claims 1 to 9, and comprising contacting said object with at least two different species of antimicrobial and/or antiviral polymers according to any of the claims 1 to 9.

14. The method according claim 1, wherein the precursor polymer of the general formula I has a median molecule weight in the range of from 100-1000 kDa.

15. The method according claim 1, wherein the antimicrobial and/or antiviral polymer is polycationic.

16. The method according claim 1, wherein said quaternized nitrogen atoms being substituted with a substituent selected from the group consisting of straight or branched C₄-C₂₀-alkyls are quaternized by a methyl or ethyl.

17. An antimicrobial and/or antiviral product obtainable by the method according to any of claims 1 - 8 or 13 - 16.

## Patentansprüche

1. Verfahren für die Herstellung eines antimikrobiellen und/oder antiviralen Produkts, umfassend
Kontaktieren mindestens einer Oberfläche eines Produkts mit einem antimikrobiellen und/oder antiviralen Polymer, das ein gerades und/oder verzweigtes Polymer ist, umfassend:
Stickstoffatome,
wobei das antimikrobielle und/oder antivirale Polymer ein modifiziertes Polymer eines Vorläuferpolymers ist, wobei das Vorläuferpolymer ein mittleres Molekulargewicht im Bereich von 25-2000 kDa aufweist, wobei das Vorläuferpolymer aus der Gruppe ausgewählt ist bestehend aus Polymeren, die die folgende Formel I aufweisen, und Copolymeren davon: 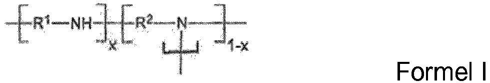
wobei:
R¹ und R² unabhängig unter einer geraden oder verzweigten (C₁-C₆)-Kohlenwasserstoffkette ausgewählt sind;
x im Bereich von 0 bis 1 liegt;
wobei das Vorläuferpolymer der Formel I zwei verschiedene Typen Bausteine umfasst, wobei einer sekundäre Amine und einer tertiäre Amine enthält, wobei das Verhältnis zwischen den sekundären und tertiären Aminen den Verzweigungsgrad der Polymers bestimmt und x, 0 ≤ x ≤ 1, und 1-x den Anteil (%/100) des entsprechenden Typs Baustein in dem Polymer darstellt; und
wobei das Vorläuferpolymer so modifiziert ist, dass
mindestens ein Teil der Stickstoffatome mit einem Substituenten substituiert ist ausgewählt aus der Gruppe bestehend aus geraden oder verzweigten C₁-C₂₀-Alkylgruppen und
mindestens ein Teil der Stickstoffatome in dem Vorläuferpolymer quaternisiert ist, wobei die quaternisierten Stickstoffatome mit einem Substituenten substituiert sind ausgewählt aus der Gruppe bestehend aus geraden oder verzweigten C₄-C₂₀-Alkylen und wobei das antimikrobielle und/oder antivirale Polymer wasserlöslich ist,
der Grad der Aminfunktionssubstitution mit einer (C₁-C₂₀)-Alkylgruppe für das das antimikrobielle und/oder antivirale Polymer mit dem Polymer und den verwendeten Substituenten variiert und der Substitutionsgrad als Prozentsatz der Aminfunktionen in dem Polymer genommen wird und der Substitutionsgrad im Bereich von 1 bis 100 % liegt und
das antimikrobielle und/oder antivirale Polymer nichtkovalent an der Oberfläche des Produkts befestigt ist, wobei eine spezielle Modifikation der Oberfläche vermieden wird.

2. Verfahren nach Anspruch 1, wobei die quaternisierten Stickstoffatome mit einem Substituenten substituiert sind ausgewählt aus der Gruppe bestehend aus geraden oder verzweigten C₆-C₁₆-Alkylen.

3. Verfahren nach Anspruch 1, wobei R¹ und R² -CH₂CH₂- sind.

4. Verfahren nach Anspruch 1, wobei der Substitutionsgrad 10 bis 100 % beträgt.

5. Verfahren nach Anspruch 4, wobei der Substitutionsgrad 10 bis 60 % beträgt.

6. Verfahren nach Anspruch 1, wobei mindestens eine antimikrobielle und/oder antivirale Verbindung an dem antimikrobiellen Polymer und/oder dem antiviralen Polymer befestigt ist.

7. Verfahren nach Anspruch 6, wobei die antimikrobielle und/oder antivirale Verbindung eine membrandestabilisierte Verbindung ist.

8. Verfahren nach Anspruch 7, wobei die antimikrobielle und/oder antivirale Verbindung ein antimikrobielles Biguanid ist.

9. Antimikrobielles und/oder antivirales Produkt, das mindestens eine Oberfläche aufweist, wobei ein antimikrobielles und/oder antivirales Polymer nach Anspruch 1 nichtkovalent an mindestens einem Teil der Oberfläche befestigt ist.

10. Produkt nach Anspruch 9, bei dem an einem Teil seiner Oberfläche mindestens zwei verschiedene Spezies antimikrobieller und/oder antiviraler Polymere nichtkovalent befestigt sind.

11. Produkt nach Anspruch 9, wobei die Oberfläche, an der das antimikrobielle und/oder antivirale Polymer befestig ist, in einer Form vorliegt ausgewählt aus der Gruppe bestehend aus Fasern, Partikeln, Textilien, Vliesstoffen, Folien, Filtern und Kombinationen davon.

12. Produkt nach Anspruch 9, wobei die Oberfläche, an der das antimikrobielle und/oder antivirale Polymer befestigt ist, aus einem Material besteht ausgewählt aus der Gruppe bestehend aus Polymeren, Kautschuk, Glas, Metallen, Keramikmaterialien, Holz, Wolle, Baumwolle und Kombinationen davon.

13. Verfahren nach Anspruch 1, umfassend:
(i) Bereitstellen eines Objekts, das eine Oberfläche aufweist, an der das antimikrobielle und/oder antivirale Polymer nach einem der Ansprüche 1 bis 9 nichtkovalent befestigt sei kann; und
(ii) Kontaktieren des Objekts mit einem antimikrobiellen und/oder antiviralen Polymer nach einem der Ansprüche 1 bis 9 und umfassend das Kontaktieren des Objekts mit mindestens zwei verschiedenen Spezies antimikrobieller und/oder antiviraler Polymere nach einem der Ansprüche 1 bis 9.

14. Verfahren nach Anspruch 1, wobei das Vorläuferpolymer der allgemeinen Formel I ein mittleres Molekulargewicht im Bereich von 100 - 1000 kDa aufweist.

15. Verfahren nach Anspruch 1, wobei das antimikrobielle und/oder antivirale Polymer polykationisch ist.

16. Verfahren nach Anspruch 1, wobei die quaternisierten Stickstoffatome, die mit einem Substituenten substituiert sind ausgewählt aus der Gruppe bestehend aus geraden oder verzweigten C₄-C₂₀-Alkylen, durch ein Methyl oder Ethyl quaternisiert sind.

17. Antimikrobielles und/oder antivirales Produkt, das durch das Verfahren nach einem der Ansprüche 1 - 8 oder 13 - 16 erhältlich ist.

## Revendications

1. Procédé de production d'un produit antimicrobien et/ou antiviral, comprenant,
la mise en contact d'au moins une surface d'un produit avec un polymère antimicrobien et/ou antiviral, étant un polymère linéaire et/ou ramifié, comprenant :
des atomes d'azote,
dans lequel le polymère antimicrobien et/ou antiviral est un polymère modifié d'un polymère précurseur, le polymère précurseur ayant un poids moléculaire médian dans la plage de 25 à 2 000 kDa, ledit polymère précurseur étant sélectionné dans le groupe constitué de polymères de formule I suivante et de copolymères de ceux-ci : 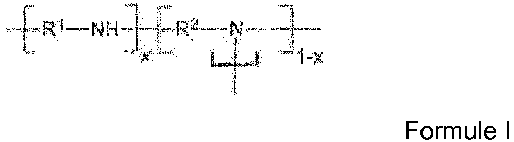
dans lequel :
R¹ et R² sont indépendamment sélectionnés parmi une chaîne hydrocarbonée en (C₁-C₆) linéaire ou ramifiée ;
x se trouve dans la plage de 0 à 1 ;
le polymère précurseur de formule I comprenant deux types différents de synthons, l'un contenant des amines secondaires et l'autre contenant des amines tertiaires dans lequel le rapport entre les amines secondaires et les amines tertiaires détermine le degré de ramification du polymère et x, 0 ≤ x ≤ 1, et 1-x représente la partie (%/100) du type correspondant de synthon dans le polymère ; et
dans lequel ledit polymère précurseur est modifié de manière à ce que
au moins une partie desdits atomes d'azote soient substitués avec un substituant sélectionné dans le groupe constitué de groupes alkyles en C₁-C₂₀ linéaires ou ramifiés, et
au moins une partie des atomes d'azotes dans ledit polymère précurseur sont quaternisés, lesdits atomes d'azote quaternisés étant substitués par un substituant sélectionné dans le groupe constitué de groupes alkyle en C₄-C₂₀ linéaires ou ramifiés, et dans lequel le polymère antimicrobien et/ou antiviral est soluble dans l'eau,
le degré de substitution de la fonction amine avec un groupe alkyle en C₁-C₂₀ pour le polymère antimicrobien et/ou antiviral varie avec le polymère et les substituants utilisés, et le degré de substitution est pris comme le pourcentage de fonctions amine dans le polymère, et le degré de substitution se trouve dans la plage de 1 à 100 %, et
le polymère antimicrobien et/ou antiviral est adhéré de façon non covalente à la surface du produit, évitant une modification spéciale de la surface.

2. Procédé selon la revendication 1, dans lequel lesdits atomes d'azote quaternisés sont substitués avec un substituant sélectionné dans le groupe constitué de groupes alkyle en C₆-C₁₈ linéaires ou ramifiés.

3. Procédé selon la revendication 1, dans lequel R¹ et R² sont -CH₂CH₂-.

4. Procédé selon la revendication 1, dans lequel le degré de substitution est de 10 à 100 %.

5. Procédé selon la revendication 4, dans lequel le degré de substitution est de 10 à 60 %.

6. Procédé selon la revendication 1, dans lequel au moins un composé antimicrobien et/ou antiviral est fixé auxdits polymère antimicrobien et/ou polymère antiviral.

7. Procédé selon la revendication 6, dans lequel ledit composé antimicrobien et/ou antiviral est un composé de déstabilisation de la membrane.

8. Procédé selon la revendication 7, dans lequel ledit composé antimicrobien et/ou antiviral est un biguanide antimicrobien.

9. Produit antimicrobien et/ou antiviral ayant au moins une surface, dans lequel un polymère antimicrobien et/ou antiviral selon la revendication 1 est fixé de façon non covalente à au moins une partie de ladite surface.

10. Produit selon la revendication 9, ayant adhéré de façon non covalente à une partie de sa surface au moins deux espèces différentes de polymères antimicrobiens et/ou antiviraux.

11. Produit selon la revendication 9, dans lequel la surface, à laquelle ledit polymère antimicrobien et/ou antiviral est adhéré, se trouve sous une forme sélectionnée dans le groupe constitué de fibres, de particules, de textiles, de non-tissés, de films, de filtres et de combinaisons de ceux-ci.

12. Produit selon la revendication 9, dans lequel ladite surface, à laquelle ledit polymère antimicrobien et/ou antiviral est adhéré, est en un matériau sélectionné dans le groupe constitué de polymères, de caoutchouc, de verre, de métaux, de céramiques, de bois, de laine, de coton et de combinaisons de ceux-ci.

13. Procédé selon la revendication 1, comprenant :
(i) la fourniture d'un objet ayant une surface à laquelle un polymère antimicrobien et/ou antiviral selon l'une quelconque des revendications 1 à 9 peut adhérer de façon non covalente; et
(ii) la mise en contact dudit objet avec un polymère antimicrobien et/ou antiviral selon l'une quelconque des revendications 1 à 9, et comprenant la mise en contact dudit objet avec au moins deux espèces différentes de polymères antimicrobiens et/ou antiviraux selon l'une quelconque des revendications 1 à 9.

14. Procédé selon la revendication 1, dans lequel le polymère précurseur de formule générale I a un poids moléculaire médian dans la plage de 100 à 1 000 kDa.

15. Procédé selon la revendication 1, dans lequel le polymère antimicrobien et/ou antiviral est polycationique.

16. Procédé selon la revendication 1, dans lequel lesdits atomes d'azote quaternisés étant substitués par un substituant sélectionné dans le groupe constitué de groupes alkyle en C₄-C₂₀ sont quaternisés par un groupe méthyle ou éthyle.

17. Produit antimicrobien et/ou antiviral pouvant être obtenu par le procédé selon l'une quelconque des revendications 1 à 8 ou 13 à 16.
